(19) **Europäisches Patentamt**

**European Patent Office**

**Office européen des brevets**

(11) **EP 1 235 360 B1**

(12) **EUROPEAN PATENT SPECIFICATION**

(45) Date of publication and mention
of the grant of the patent:
**08.03.2006 Bulletin 2006/10**

(51) Int Cl.:
*H04J 13/00* (2006.01)    *H04B 1/707* (2006.01)

(21) Application number: **01972522.5**

(22) Date of filing: **27.09.2001**

(86) International application number:
**PCT/JP2001/008416**

(87) International publication number:
**WO 2002/027957 (04.04.2002 Gazette 2002/12)**

(54) **COMMUNICATION TERMINAL APPARATUS AND DEMODULATION METHOD**

KOMMUNIKATIONSENGERÄT UND DEMODULATIONSVERFAHREN

APPAREIL DE TERMINAL DE COMMUNICATION ET PROCEDE DE DEMODULATION

(84) Designated Contracting States:
**DE FR GB**

(30) Priority: **27.09.2000 JP 2000294644**

(43) Date of publication of application:
**28.08.2002 Bulletin 2002/35**

(73) Proprietor: **MATSUSHITA ELECTRIC INDUSTRIAL CO., LTD.**
**Kadoma-shi, Osaka 571-8501 (JP)**

(72) Inventor: **FUJII, Hideo**
**Yokosuka-shi, Kanagawa 239-0847 (JP)**

(74) Representative: **Grünecker, Kinkeldey, Stockmair & Schwanhäusser**
**Anwaltssozietät**
**Maximilianstrasse 58**
**80538 München (DE)**

(56) References cited:
WO-A-00/54446          WO-A-98/38805
JP-A- 9 064 846        JP-A- 2000 261 412
JP-A- 2001 251 236     JP-A- 2001 285 254

• KLEIN A ET AL: "ZERO FORCING AND MINIMUM MEAN-SQUARE-ERROR EQUALIZATION FOR MULTIUSER DETECTION IN CODE-DIVISION MULTIPLE-ACCESS CHANNELS" IEEE TRANSACTIONS ON VEHICULAR TECHNOLOGY, IEEE INC. NEW YORK, US, vol. 45, no. 2, 1 May 1996 (1996-05-01), pages 276-287, XP000598095 ISSN: 0018-9545

• MAKOTO ITO: 'IMT-2000 TDD ni okeru kudari joint detection ni enzan-ryou sakugen-hou no kentou' 2000NEN DENSHI JOHO TSUUSHIN GAKKAI TSUUSHIN SOCIETY TAIKAI KOUEN RONBUNSHUU 1 07 September 2000, page 377, XP002906710

• RACHEL E. LEARNED ET AL.: 'Low complexity optimal joint detection for oversaturated multiple access communications' IEEE TRANSACTIONS ON SIGNAL PROCESSING vol. 45, no. 1, January 1997, pages 113 - 123, XP000656784

**Description**

Technical Field

The present invention relates to a communication terminal apparatus and demodulation method using matrix manipulation to demodulate a receiving signal in a radio communication system utilizing CDMA (Code Division Multiple Access) technique.

Background Art

Joint Detection (hereinafter referred to as "JD") is a method to demodulate a receiving signal.

The description of such a JD method is indicated in ("Interference Cancellation vs. Channel Equalization and Joint Detection for the Downlink of C/TDMA Mobile Radio Concepts", Bernd Steiner, proceedings of EPMCC Conference Germany 1997, No.145, pp.253-260) or ("EFFICIENT MULTI-RATE MULTI-USER DETECTION FOR THE ASYNCHRONOUS WCDMA UPLINK", H. R. Karimi, VTC'99, pp.593-597), etc.

JD is a demodulating method in which matrix manipulation is carried out using a system matrix that is obtained by regularly arranging results of calculating the convolution of a spreading code assigned to each user and a channel estimation of each user, and by multiplying the matrix manipulation result by a data portion of a received signal, the demodulation signal is obtained after cancelling several kinds of interference such as interference due to multipath fading, inter-symbol interference and multiple access interference.

As a result, recently, JD has attracted attention because it possesses a feature that reliability of demodulation data is higher than that of the RAKE combining being generally used.

However, since the strategy adopted by conventional JD is to calculate the convolution of all user's channel estimation values and all user's assigned spreading codes, there is a weak point of enlarging the apparatus size. Therefore, a certain measure must be considered in case of using the JD in a communication terminal apparatus that greatly requires its miniaturization and lightweighting.

EP 1 077 551 A1 discloses an interference signal eliminator, wherein matched filters extract channel estimated values corresponding to n users by finding correlation with the reception signal. Threshold processing sections perform threshold processing on estimated power values obtained based on the channel estimated values corresponding to the n users. A JD section performs matrix calculations using channel estimated values subject to threshold processing. A multiplication section performs a multiplication between the matrix calculation result and the reception signal. An identifier performs a hard decision on the multiplication result.

WO 98/38805 discloses a CDMA reception method and a receiver comprising means for digitizing a received transmission comprising a desired signal and a plurality of interfering signals, each multiplied by a code of a known code set, means for cancelling at least some of the interfering signals from the desired signal, means for detecting the desired signal after the interference cancellation, means for estimating the number of interfering signals and the codes used by them in a received transmission, and means for cancelling the effect of perceived signals from the desired signal.

Klein A et al.: 'Zero Forcing and Minimum Mean-Square-Error Equalization for Multiuser Detection in Code-Division Multiple-Access Channels', IEEE Inc. New York, US, vol. 45, no. 2, May 1996 (1996-05-01), pp. 276-287 describes four sub-optimum detection techniques for CDMA systems based on zero forcing (ZF) and minimum mean-square-error (MMSE) equalization with and without decision feedback (DF), used to combat inter-symbol interference and multiple-access interference.

Disclosure of Invention

It is an object of the present invention to provide a communication terminal apparatus and demodulation method in which an amount of calculation can be reduced while preventing performance deterioration as much as possible.

The object is achieved by a communication terminal apparatus according to claim 1 and a demodulating method according to claim 4. Advantageous embodiments are subject-matter of the dependent claims.

In the communication terminal apparatus, the receiving power of signals transmitted from base station to each user may be measured, and the JD component of a user may be excluded, whose maximum value of receiving power does not satisfy a predetermined threshold based on a maximum value of receiving power of the communication terminal apparatus and predetermined threshold.

Brief Description of Drawings

FIG. 1 is a view showing a slot structure of a signal transmitted to a communication terminal apparatus according to alternative 1;

FIG. 2 is a graph illustrating a delay profile generated in a communication terminal apparatus according to alternative 1;

FIG. 3 is a block diagram showing a configuration of a communication terminal apparatus according to alternative 1 of the present invention;

FIG. 4 is a view showing a slot structure of a signal transmitted to a communication terminal apparatus according to alternative 2; and

FIG. 5 is a block diagram showing a configuration of a communication terminal apparatus according to alternative 2.

Best Mode for Carrying out the Invention

In a radio communication system, in general, aiming at increasing the channel capacity while a base station apparatus and each communication terminal apparatus are able to obtain desired receiving quality, transmission power control is carried out to maintain receiving quality at a fixed level. However, transmission power of the signal transmitted to each communication terminal apparatus from the base station apparatus is changed according to distances between apparatuses and propagation environments. In addition, the desired signal which is transmitted from the base station apparatus to a respective communication terminal apparatus (user) with large power is not affected by interference of signals with small power transmitted to other apparatuses. This point motivates the present inventor(s) to reach the present invention.

In other words, a gist of the present invention is that the communication terminal apparatus measures the receiving power of a signal transmitted from a base station apparatus to each user, and excludes JD component of a user whose maximum value of receiving power does not satisfy a predetermined threshold based on a maximum value of receiving power of the communication terminal apparatus and predetermined threshold.

Alternatives will be described below specifically with reference to accompanying drawings.

(Alternative 1)

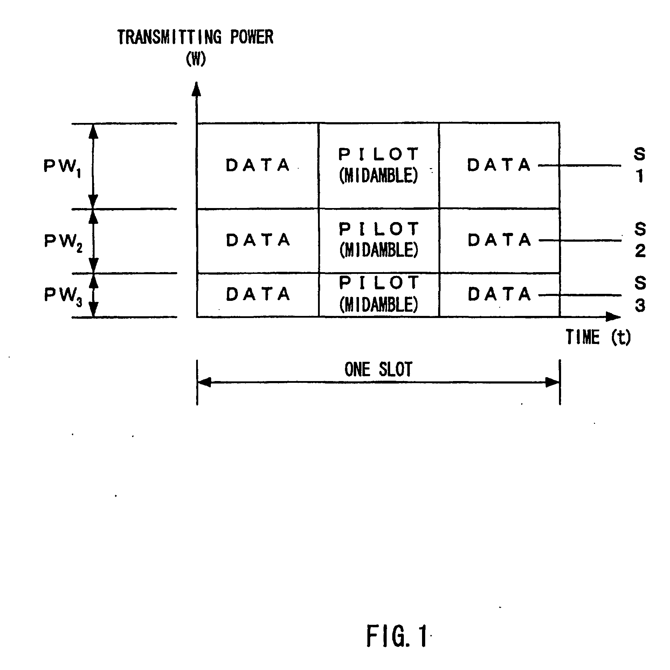

First, referring to FIG. 1, a slot structure of a signal transmitted to a communication terminal apparatus according to Alternative 1 will be described. FIG. 1 shows the case where a base station apparatus performs radio communications with users 1-3. As shown in FIG. 1, a signal Si transmitted to each user i (i = 1, 2, 3) from the base station apparatus has the slot structure in which a pilot symbol as a known signal is inserted between data thereof. Additionally, in an actual radio communication, a guard time is set between slots.

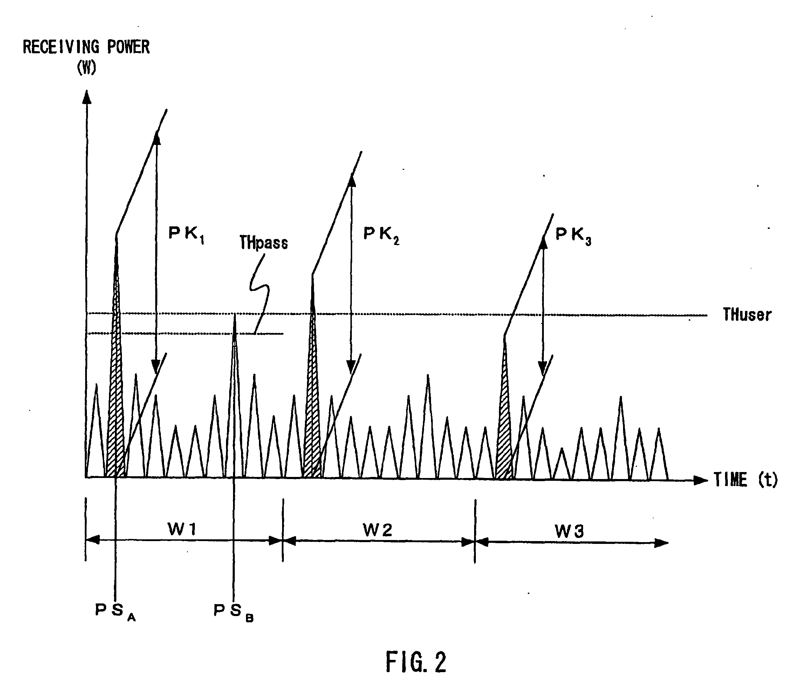

It is desirable to adopt midamble as a pilot symbol. Midamble is generated by shifting a known basic code that is repeated every predetermined chip period by a predetermined chip unit. In the receiving side, a channel estimation value which is a value that indicates an amount of phase rotation and amount of amplitude variation in a radio propagation path is computed by calculating the correlation between the midamble portion of receiving signal and a basic code, and the receiving power which is the square sum of an in-phase component and quadrature component of the channel estimation value is continuously obtained for predetermined time interval. Hereinafter, the receiving power obtained from the channel estimation value is referred to as "estimating value power". In the receiving side, as illustrated in the delay profile of FIG. 2, the maximum value $PK_i$ of estimating value power corresponding to each user i can be detected for each range of an assumed maximum delay width Wi, and one correlation processing can perform channel estimation of all users. In addition, midamble is described specifically in published Japanese Patent Application No. 2001-024556. A.

Moreover, as shown in FIG. 1, the transmitting power $PW_i$ from the base station apparatus to respective users which are controlled so that the receiving quality in each communication terminal apparatus becomes constant are different according to distances between apparatuses and propagation environments. Further, as transmitting signal power from the base station apparatus to the communication terminal apparatus is large, the maximum value $PK_i$ of the estimating value power becomes large.

For instance, FIG. 1 shows the case where transmitting power $PW_1$ of user 1 signal is the largest whereas transmitting power $PW_3$ of user 3 signal is the smallest. In this case, as shown in the delay profile of Fig. 2, the maximum value $PK_1$ of the estimating value power corresponding to user 1 becomes the largest while maximum value $PK_3$ of the estimating value power corresponding to user 3 becomes the smallest.

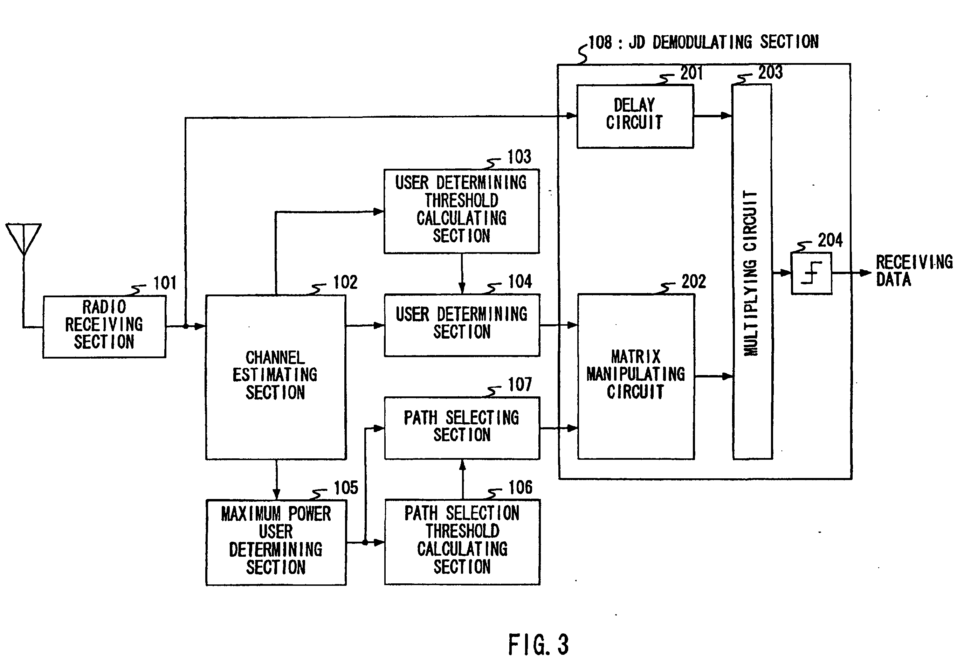

Next, a configuration of the communication terminal apparatus according to alternative 1 of the present invention is explained using the block diagram of FIG. 3. Moreover, the communication terminal apparatus shown in FIG. 3 corresponds to user 1 in FIG. 1 and FIG. 2.

The communication terminal apparatus shown in FIG. 3 is mainly composed of radio receiving section 101, channel estimating section 102, user determining threshold calculating section 103, user determining section 104, maximum power user determining section 105, path selection threshold calculating section 106, path selecting section 107 and JD demodulating section 108.

Radio receiving section 101 performs frequency conversion by converting the radio frequency received signal having the slot structure shown in FIG. 1 into a baseband signal. Then, radio receiving section 101 outputs the data portion of the receiving signal being converted into baseband (henceforth, it is referred to as "receiving baseband signal") to JD demodulating section 108 and outputs the midamble portion of the receiving baseband signal to channel estimating section 102.

Channel estimating section 102 calculates a channel estimation value by calculating the correlation between a basic code and the midamble of receiving baseband signal, and hence, generates a delay profile as shown in the aforementioned FIG. 2. Then, channel estimating section 102 outputs a delay profile of the communication terminal apparatus itself to user determining threshold calculating section 103 while outputs all delay profiles to user determining section 104 and maximum power user determining section 105.

Referring to communication terminal apparatus delay profile, user determining threshold calculating section 103 sets a threshold value $TH_{user}$ used for user determination based on the own-apparatus maximum value of the estimating value power. For example, the threshold $TH_{user}$ is set such that a predetermined ratio of the threshold to the maximum value of the estimating value power of the communication terminal apparatus is obtained. Further, user determining threshold calculating section 103 outputs the assigned threshold $TH_{user}$ to user determining section 104.

User determining section 104 selects, with reference to delay profile of the other apparatus(es), the user which utilizes matrix manipulation for cancelling interference when its maximum value of the estimating value power exceeds the threshold value $TH_{user}$. For instance, in case of the aforementioned Fig. 2, user determining section 104 selects user 1 and user 2 since maximum value $PK_i$ of estimating value power thereof exceed the threshold value $TH_{user}$. Then, user determining section 104 outputs a user information that shows the selected user to JD demodulating section 108.

Maximum power user determining section 105 determines a user which has a maximum value $PK_i$ of the estimating value power in the received slot (henceforth, it is referred to as "maximum power user") with reference to the delay profile outputted from channel estimating section 102. For example, in the case of the above-mentioned FIG. 2, since maximum value $PK_1$ of the estimating value power is the largest, maximum power user determining section 105 determines user 1 as a maximum power user. Next, maximum power user determining section 105 outputs a delay profile of the maximum power user to path selection threshold calculating section 106 and path selecting section 107.

Path selection threshold calculating section 106 sets, with reference to the delay profile of the maximum power user, a threshold value $TH_{path}$ used for path selection based on the maximum value of estimating value power of maximum power user. For example, corresponding to the maximum value PK of the estimating value power of the maximum power user, the threshold value $TH_{path}$ is set such that a predetermined ratio of the threshold to the maximum value of the maximum power user of the communication terminal apparatus is obtained. Then, path selection threshold calculating section 106 outputs the set threshold value $TH_{path}$ to path selecting section 107.

Path selecting section 107 selects, with reference to the delay profile of the maximum power user, the path which exceeds the threshold value $TH_{path}$ to be used for matrix manipulation aiming at cancelling the interference. For instance, in the case of the aforementioned FIG. 2, path selecting section 107 selects path $PS_A$ and path $PS_B$ by which the correlation values exceed the threshold value $TH_{path}$. Then, path selecting section 107 outputs a position of the selected path and its respective channel estimation value to JD demodulating section 108.

JD demodulating section 108 generates a matrix by predetermined processing using the channel estimation value of the path selected by path selecting section 107 of the corresponding user selected by user determining section 104, and performs (Joint Detection) by multiplying the generated matrix by the receiving baseband signal. Next. JD demodulating section 108 executes demodulation to obtain the desired receiving data while cancelling the interference.

Next, a detailed description of an internal configuration of JD demodulating section 108 is given below. JD demodulating section 108 is mainly provided with delay circuit 201, matrix manipulating circuit 202, multiplying circuit 203 and identification circuit 204.

Delay circuit 201 delays a data portion of a receiving baseband signal to match a processing timing of multiplying circuit 203.

Matrix manipulating circuit 202 performs matrix manipulation, described next, using the path position and path channel estimation value of the path selected by path selecting section 107 of the corresponding user selected by user determining section 104.

First, calculation of the convolution between a channel estimation value of each of selected users and a respective spreading code assigned to the user is carried out, resulting in obtaining a matrix that shows the convolution calculation results. The matrix in which convolution calculation results of every user are regularly arranged, hereinafter, is referred to as a system matrix. Here, the system matrix is denoted by matrix **[A]** in order to simplify the explanation. Matrix manipulating circuit 202 performs matrix multiplication shown in equation (1) using a system matrix **[A]** and obtains matrix **[B].**

$$[B] = ([A]^H \cdot [A])^{-1} \cdot [A]^H, \qquad \qquad (1)$$

where, $[A]^H$ is the conjugate transpose of the system matrix and $([A]^H \cdot [A])^{-1}$ is the inverse matrix of $[A]^H \cdot [A]$.

Multiplying circuit 203 performs multiplication processing of matrix **[B]** sent from matrix manipulating circuit 202 and the data portion of the receiving baseband signal sent from delay circuit 201 after being timing-aligned. Thereby, the receiving data of own-apparatus to which interference was cancelled is obtained.

Identification circuit 204 obtains receiving data after performing a hard decision on own-apparatus receiving data outputted from multiplying circuit 203.

Thus, it is possible to reduce the amount of calculation by performing JD excluding a signal of the user whose estimating value power does not satisfy the threshold as compared to the case of processing the signals of all users, moreover, it is also possible to execute demodulation almost without degrading the performance.

Moreover, since demodulation by JD is performed also to other apparatus signals having small power which leads to a difficulty of estimating the interference, the conventional problem that a reduction of performance deterioration is proportional to performing interference cancellation well is also solvable.

(Alternative 2)

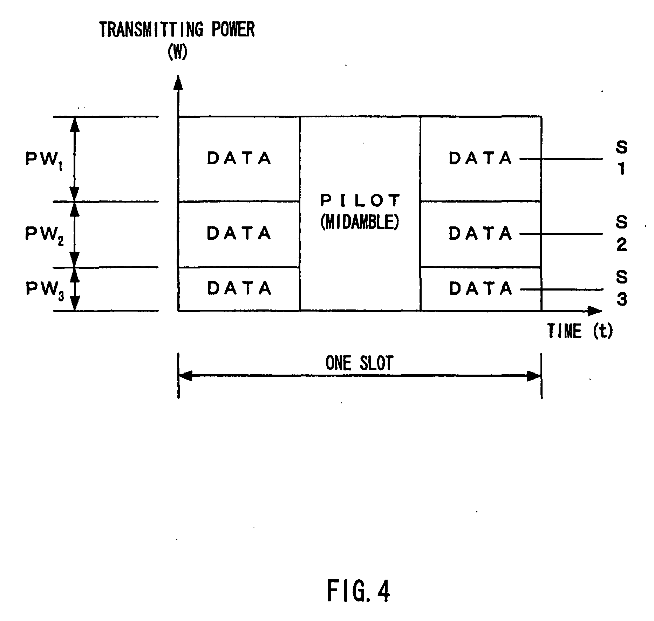

There is a case that a common midamble at a pilot symbol, as shown in FIG. 4, is adopted as a structure of a slot employed only to downlink in order to increase channel estimation accuracy, etc. However, since the receiving power of each user cannot be estimated from a delay profile when this common midamble is adopted, a problem due to the difficulty of selecting a user which utilizes matrix manipulation for cancelling the interference is generated when applying the method indicated in Alternative 1.

In Alternative 2, the aforementioned problem is to be solved and the user which utilizes matrix manipulation for cancelling the interference is selected even when adopting common midamble, then, the case where performing Joint Detection is described.

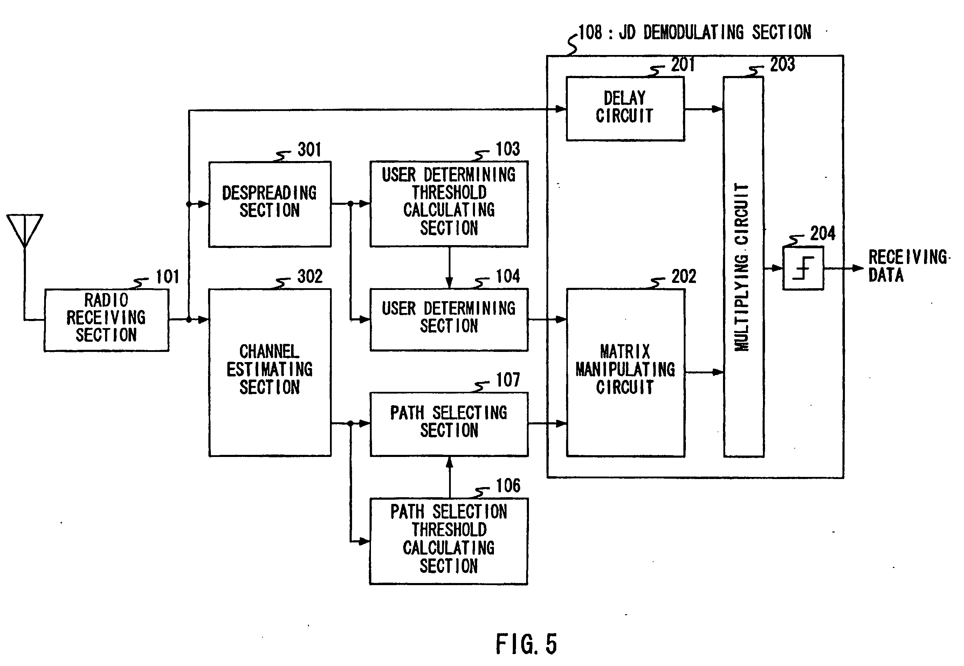

FIG. 5 is a block diagram showing a configuration of a communication terminal apparatus according to Alternative 2. In addition, the components of communication terminal apparatus shown in FIG. 5 similar to those corresponding components of the communication terminal apparatus shown in FIG. 3 are assigned the same reference numerals and descriptions thereof are omitted.

Comparing to the communication terminal apparatus shown in FIG. 3, the communication terminal apparatus shown in FIG. 5 is further provided with a despreading section 301 while maximum power user determining section 105 is deleted. Moreover, operation of channel estimating section 302 of the communication terminal apparatus shown in FIG. 5 differs from that of channel estimating section 102 of the communication terminal apparatus shown in FIG. 3.

Radio receiving section 101 outputs the data portion of the receiving baseband signal to despreading section 301 and JD demodulating section 108 whereas outputs the midamble portion of the receiving baseband signal to channel estimating section 302.

Despreading section 301 measures the receiving power by performing the correlation between the data portion of the receiving baseband signal and spreading code which has been multiplied by each user's data portion at a base station apparatus side, outputs the data portion receiving power of its own-apparatus to user determining threshold calculating section 103 and outputs data portion receiving power of other apparatus to user determining section 104.

User determining threshold calculating section 103 sets a threshold to be used for user determining based on the data portion receiving power of the communication terminal apparatus and outputs the set threshold used for user determining to user determining section 104.

User determining section 104 selects a user used in matrix manipulation for cancelling the interference whose data portion receiving power exceeds the user determining threshold and outputs user information that shows the selected user to JD demodulating section 108.

Channel estimating section 302 creates a delay profile by calculating the correlation between the basic code and the midamble of the receiving baseband signal and outputs the created delay profile to path selection threshold calculating section 106 and path selecting section 107.

Path selection threshold calculating section 106 sets a threshold for path selection based on the maximum value of estimating value power with reference to the delay profile and outputs the assigned threshold value for path selection to path selecting section 107.

Path selecting section 107 selects, referring to the delay profile, a path which is used in matrix manipulation for cancelling the interference and which exceeds the threshold value used for path selection and outputs the selected path position and its corresponding channel estimation value to JD demodulating section 108.

Accordingly, by measuring the data portion receiving power of the signal transmitted from base station apparatus to each user, it is possible to select a user used in matrix manipulation for cancelling the interference even when a common midamble is adopted, hence, it is also possible to obtain the same effect as that of the aforementioned alternative 1.

Moreover, although the communication terminal apparatus of both aforementioned alternatives execute demodulation using JD, the present invention is not limited to this, and the same effect can be obtained when executing demodulation using other matrix manipulation.

As is clear from the foregoing, according to the present invention, a communication terminal apparatus measures receiving power of signal transmitted from base station apparatus to each user and excludes JD component of the signal whose receiving power does not satisfy a predetermined threshold value, and it is thereby possible to reduce the amount of JD calculation with almost no performance deterioration caused.

The present application is based on the published Japanese Patent Application No. 2002-111542, A filed on Sep. 27, 2000.

Industrial Applicability

The present invention is applicable to a communication terminal apparatus of a radio communication system based on CDMA technique.

**Claims**

1.  A communication terminal apparatus comprising:

    a channel estimator (102) configured to calculate a channel estimation value and to create a delay profile on a per user basis using a known signal included in a receiving signal that is transmitted from a base station apparatus;
    a first threshold calculator (103);
    a user determiner (104) configured to select users showing greater maximum values of receiving power than the first threshold value in delay profiles created with respect to other users; and
    a demodulator (108) configured to carry out matrix manipulation, and to demodulate a data portion of the receiving signal,

    **characterised**
    **by** a maximum power user determiner (105) configured to determine a user having a greatest maximum value of receiving power in all of said delay profiles created in said channel estimator;
    by a second threshold calculator (106) configured to set a second threshold value based on said greatest maximum value of receiving power;
    by a path selector (107) configured to select paths having greater values of receiving power than the second threshold value;
    in that the first threshold calculator (103) is configured to set a first threshold value based on a maximum value of receiving power in a delay profile created with respect to said communication terminal apparatus; and
    in that the demodulator (108) is further configured to use channel estimation values of the paths selected in the path selector, among the users selected in the user determiner, for matrix manipulation and demodulation.

2.  The communication terminal apparatus according to claim 1, wherein the demodulator is adapted to perform demodulation by joint detection.

3.  The communication terminal apparatus according to claim 1 or 2, wherein
    said known signal comprises a midamble; and
    said channel estimator is further adapted to determine a correlation between said midamble and a basic code in said known signal.

4.  A demodulating method comprising the steps of:

    (i) calculating a channel estimation value and creating a delay profile on a per user basis using a known signal included in a receiving signal that is transmitted from a base station apparatus;
    (ii) setting a first threshold value based on a maximum value of receiving power in a delay profile created with respect to said communication terminal apparatus;
    (iii) selecting users showing greater maximum values of receiving power than the first threshold value in delay profiles created with respect to other users;

(iv) determining a user having a greatest maximum value of receiving power in all of said delay profiles created in step (i);

(v) setting a second threshold value based on said greatest maximum value of receiving power;

(vi) selecting paths having greater values of receiving power than the second threshold value; and

(vii) carrying out matrix manipulation using channel estimation values of the paths selected in step (vi), among the users selected in step (iii), and demodulating a data portion of the receiving signal.

**Patentansprüche**

1. Kommunikations-Endgerätvorrichtung, die umfasst:

   eine Kanal-Schätzeinrichtung (102), die so konfiguriert ist, dass sie einen Kanal-Schätzwert berechnet und ein Verzögerungsprofil pro Benutzer unter Verwendung eines bekannten Signals erzeugt, das in einem Empfangssignal enthalten ist, das von einer Basisstationsvorrichtung gesendet wird;
   eine erste Schwellenwertberechnungseinrichtung (103);
   eine Einrichtung (104) zum Bestimmen eines Benutzers, die so konfiguriert ist, dass sie Benutzer auswählt, die Maximalwerte der Empfangsleistung aufweisen, die größer sind als die ersten Schwellenwerte in in Bezug auf andere Benutzer erzeugten Verzögerungsprofilen; und
   einen Demodulator (108), der so konfiguriert ist, dass er Matrixmanipulation ausführt und einen Datenabschnitt des Empfangssignals demoduliert,
   **gekennzeichnet**
   **durch** eine Einrichtung (5) zum Bestimmen eines Benutzers mit maximaler Leistung, die so konfiguriert ist, dass sie einen Benutzer bestimmt, der einen größten Maximalwert der Empfangsleistung in allen in der Kanal-Schätzeinrichtung erzeugten Verzögerungsprofilen hat;
   eine zweite Schwellenwert-Berechnungseinrichtung (106), die so konfiguriert ist, dass sie einen zweiten Schwellenwert auf Basis des größten Maximalwertes der Empfangsleistung festlegt;
   eine Übertragungsweg-Auswähleinrichtung (107), die so konfiguriert ist, dass sie Übertragungswege mit Werten der Empfangsleistung auswählt, die größer sind als der zweite Schwellenwert;
   **dadurch**, dass die erste Schwellenwert-Berechnungseinrichtung (103) so konfiguriert ist, dass sie einen ersten Schwellenwert auf Basis eines Maximalwertes der Empfangsleistung in einem in Bezug auf die Komrnunikations-Endgerätvorrichtung erzeugten Verzögerungsprofil festlegt; und
   dass der Demodulator (108) des Weiteren so konfiguriert ist, dass er Kanalschätzwerte der in der Übertragsweg-Auswähleinrichtung ausgewählten Übertragungswege unter den in der Benutzer-Bestimmungseinrichtung ausgewählten Benutzern für Matrixmanipulation und Demodulation verwendet.

2. Kommunikationsendgerät-Vorrichtung nach Anspruch 1, wobei der Demodulator so eingerichtet ist, dass er Demodulation durch Gemeinschafts-Detektion durchführt.

3. Kommunikationsendgerät-Vorrichtung nach Anspruch 1 oder 2, wobei
   das bekannte Signal eine Midamble umfasst; und
   die Kanal-Schätzeinrichtung des Weiteren so eingerichtet ist, dass sie eine Korrelation zwischen der Midamble und einem Grundcode in dem bekannten Signal bestimmt.

4. Demodulationsverfahren, das die folgenden Schritte umfasst:

   I) Berechnen eines Kanal-Schätzwertes und Erzeugen eines Verzögerungsprofils pro Benutzer unter Verwendung eines bekannten Signals, das in einem Empfangssignal enthalten ist, das von einer Basisstationsvorrichtung gesendet wird;
   II) Einstellen eines ersten Schwellenwertes auf Basis eines Maximalwertes der Empfangsleistung in einem in Bezug auf die Kommunikations-Endgerätvorrichtung erzeugten Verzögerungsprofil;
   III) Auswählen von Benutzern, die Maximalwerte der Empfangsleistung aufweisen, die größer sind als der erste Schwellenwert in in Bezug auf andere Benutzer erzeugten Verzögerungsprofilen;
   IV) Bestimmen eines Benutzers mit einem größten Maximalwert der Empfangsleistung in allen der in Schritt I) erzeugten Verzögerungsprofilen;
   V) Einstellen eines zweiten Schwellenwertes auf Basis des größten Maximalwertes der Empfangsleistung;
   VI) Auswählen von Übertragungswegen mit Werten der Empfangsleistung, die größer sind als der zweite Schwellenwert; und

VII) Ausführen von Matrixmanipulation unter Verwendung von Kanal-Schätzwerten der in Schritt VI) ausgewählten Übertragungswege unter den in Schritt III) ausgewählten Benutzern und Demodulieren eines Datenabschnitts des Empfangssignals.

## Revendications

1. Appareil de terminal de communication comprenant :

un estimateur de canal (102) configuré pour calculer une valeur d'estimation de canal et pour créer un profil de retard sur une base par utilisateur en utilisant un signal connu inclut dans un signal de réception qui est transmit à partir d'un appareil de station de base ;
un premier calculateur de seuil (103) ;
un dispositif de détermination d'utilisateur (104) configuré pour sélectionner les utilisateurs montrant de plus grandes valeurs maximales de puissance de réception que la première valeur seuil dans les profils de retard crées par rapport à d'autres utilisateurs ; et
un démodulateur (108) configuré pour exécuter de la manipulation de matrice, et pour démoduler une portion de données du signal de réception,

**caractérisé**
**par** un dispositif de détermination d'utilisateur de puissance maximale (105) configuré pour déterminer un utilisateur ayant une plus grande valeur maximale de puissance de réception dans tous lesdits profils de retard crées dans ledit estimateur de canal ;
par un deuxième calculateur de seuil (106) configuré pour fixer une deuxième valeur seuil basée sur ladite plus grande valeur maximale de puissance de réception ;
par un sélecteur de chemin (107) configuré pour sélectionner les chemins ayant de plus grandes valeurs de puissance de réception que la deuxième valeur seuil ;
en ce que le premier calculateur de seuil (103) est configuré pour fixer une première valeur seuil basée sur une valeur maximale de puissance de réception dans un profil de retard crée par rapport audit appareil de terminal de communication ; et
en ce que le démodulateur (108) est par ailleurs configuré pour utiliser les valeurs d'estimation de canal des chemins sélectionnés dans le sélecteur de chemin, parmi les utilisateurs sélectionnés dans le dispositif de détermination d'utilisateur, pour manipulation de matrice et démodulation.

2. Appareil de terminal de communication selon la revendication 1, où le démodulateur est adapté pour effectuer de la démodulation par détection jointe.

3. Appareil de terminal de communication selon la revendication 1 ou 2, où ledit signal connu comprend une midambule ; et
ledit estimateur de canal est par ailleurs adapté pour déterminer une corrélation entre ladite midambule et un code basique dans ledit signal connu.

4. Procédé de démodulation comprenant les étapes de :

(i) calculer une valeur d'estimation de canal et créer un profil de retard sur une base par utilisateur en utilisant un signal connu inclut dans un signal de réception qui est transmit à partir d'un appareil de station de base ;
(ii) fixer une première valeur seuil basée sur une valeur maximale d'une puissance de réception dans un profil de retard crée par rapport audit appareil de terminal de communication ;
(iii) sélectionner les utilisateurs montrant de plus grandes valeurs maximales de puissance de réception que la première valeur seuil dans les profils de retard crées par rapport à d'autres utilisateurs ;
(iv) déterminer un utilisateur ayant une plus grande valeur maximale de puissance de réception dans tous lesdits profils de retard crées dans l'étape (i)
(v) fixer une deuxième valeur seuil basée sur ladite plus grande valeur maximale de puissance de réception ;
(vi) sélectionner les chemins ayant de plus grandes valeurs de puissance de réception que la deuxième valeur seuil ; et
(vii) exécuter une manipulation de matrice en utilisant des valeurs d'estimation de canal des chemins sélectionnés dans l'étape (vi), parmi les utilisateurs sélectionnés dans l'étape (iii), et démoduler une portion de données du signal de réception.

TRANSMITTING POWER
(W)

| | DATA | PILOT (MIDAMBLE) | DATA | S 1 |
|---|---|---|---|---|
| PW$_1$ | | | | |
| PW$_2$ | DATA | PILOT (MIDAMBLE) | DATA | S 2 |
| PW$_3$ | DATA | PILOT (MIDAMBLE) | DATA | S 3 |

TIME (t)

ONE SLOT

FIG. 1

FIG. 2

FIG. 3

FIG. 4

FIG. 5

EP 1 235 360 B1